# EUROPÄISCHE PATENTSCHRIFT

(11) **EP 2 560 125 B1**
(45) Veröffentlichungstag und Bekanntmachung des Hinweises auf die Patenterteilung: **05.03.2014**
(21) Anmeldenummer: 11006831.9
(22) Anmeldetag: 19.08.2011
(51) Int. Cl.: G06K 7/00, G06K 7/10

(54) **Verfahren und Schreib-Lesegerät für eine Anordnung mit einer Mehrzahl berührungslos auslesbarer Transponder**
Method and read/write device for an assembly with a number of contactless readable transponders
Procédé et appareil d'écriture laser pour un agencement doté d'une multitude de transpondeurs lisibles sans contact

(43) Veröffentlichungstag der Anmeldung: 20.02.2013
(73) Patentinhaber: Siemens Aktiengesellschaft, 80333 München (DE)
(72) Erfinder: Horst, Dieter, 90556 Cadolzburg (DE); Neidig, Jörg Dr., 90403 Nürnberg (DE); Weinländer, Markus, 91230 Happurg (DE)

(56) Entgegenhaltungen:
- EP-A1- 1 657 606
- US-A1- 2006 176 152

## Beschreibung

Die Erfindung betrifft ein Verfahren für ein Schreib-Lesegerät in einer Anordnung mit einer Mehrzahl berührungslos auslesbarer Transponder gemäß dem Oberbegriff des Patentanspruchs 1, und einen Schreib-Lesegerät zur Ausführung des Verfahrens gemäß des Oberbegriffs des Patentanspruchs 14.

Mittels der RFID-Technologie (RFID = Radio Frequency Identification) werden RFID-Etiketten, die meist als Transponder oder "Tags" bezeichnet werden, durch Schreib-Lesegeräte ("Reader") berührungslos erfasst und ausgelesen. Meist werden die Transponder dabei durch ein elektromagnetisches Feld, welches durch ein Schreib-Lesegerät durch Aussenden einer Trägerwelle mit einer ausreichenden Sendeleistung erzeugt wird, aktiviert und zumeist auch mit Energie versorgt (passive Transponder), wobei jedoch auch Ausführungsformen bekannt sind, bei denen die Energieversorgung des Transponders durch eine eigene Stromversorgung, beispielsweise Batterien, bewerkstelligt wird (aktive Transponder).

Die RFID-Technologie wird zumeist dort benutzt, wo Objekte, beispielsweise Werkstücke, Versandstücke etc. im Umfeld eines Schreib-Lesegerätes eindeutig über Funk erfasst und identifiziert werden sollen. Dazu kann ein Schreib-Lesegerät Informationen, die zumindest eine eindeutige Identifizierungsnummer umfassen, über Funk auf den Transponder speichern und wieder auslesen. In einer Arbeitsumgebung, insbesondere in industriellen Automatisierungsanordnungen, ist dabei das Schreib-Lesegerät regelmäßig an eine Steuerungseinheit (Industriesteuerung "PLC" oder Personal-Computer) angeschlossen.

Insbesondere beim Einsatz der RFID-Technologie in industriellen Produktionsanlagen ist es häufig gefordert, genau dasjenige Objekt und damit genau denjenigen Transponder, welcher sich in unmittelbarer Nähe des Schreib-Lesegerätes befindet, eindeutig zu identifizieren, um daraufhin entsprechende Fertigungsschritte daran durchzuführen etc. Andererseits werden in solchen industriellen Automatisierungsumgebungen häufig sog. Fernfeld-RFID-Systeme eingesetzt, die typischer Weise eine Erfassung von Transpondern im Umkreis von mehreren Metern um ein Schreib-Lesegerät herum ermöglichen. In dichtgepackten Umgebungen, wenn also mehrere Objekte mit ihren zugehörigen Transpondern nahe beieinander angeordnet sind, kommt es häufig vor, dass ein RFID-Schreib-Lesegerät in seinem Erfassungsbereich gleichzeitig mehrere Transponder erfasst, d.h., dass zusätzlich zu dem zum Schreib-Lesegerät bzw. dessen Antenne nächstliegenden Transponder noch weitere Transponder erfasst werden. Eine eindeutige Zuordnung des zu diesem Zeitpunkt zu bearbeitenden oder zu hantierenden Objektes ist dabei nicht mehr möglich, so dass Fehler in nachgelagerten Prozessen auftreten können.

Zur Lösung des Problems ist es bekannt, die Sendeleistung des Schreib-Lesegerätes soweit zu reduzieren, dass aufgrund der mit der Reduzierung der Sendeleistung verbundenen geringeren Reichweite nur maximal ein einziger Transponder erkannt wird. Als nachteilig hat sich dabei erwiesen, dass dabei die Sendeleistung so weit absinkt oder abgesenkt werden muss, dass in vielen Fällen der gewünschte ("richtige") Transponder nicht mehr zuverlässig erfasst bzw. erkannt werden kann. Insbesondere in den Fällen, in denen prozessbedingt zwischen dem Lesen und dem Schreiben von Daten desselben Transponders eine längere Zeitspanne liegt, ist nicht gewährleistet, dass zu beiden Zeitpunkten der "richtige" Transponder klar erkannt/erfasst wird und eine eindeutige Kommunikation mit diesem Transponder jeweils möglich ist.

Eine andere Strategie zur Lösung des Problems liegt darin, die gleichzeitige Erfassung und den gleichzeitigen Betrieb einer Kommunikationsbeziehung mit mehreren Transpondern zu erlauben, wobei mittels einer Steuerungseinrichtung, mit der das Schreib-Lesegerät verknüpft ist, eine entsprechende Auswertelogik realisiert wird, mit der die Vielzahl an gleichzeitig bestehenden Kommunikationsbeziehungen verwaltet wird und mit der sichergestellt wird, dass an einer entsprechenden Verarbeitungsstation o.ä. die dem "richtigen", (sprich: meist dem nächstliegenden) Transponder zugeordneten Arbeitsvorgänge durchgeführt werden. Dies hat jedoch zum Nachteil, dass die entsprechende Verarbeitungslogik zur Verwaltung mehrerer Kommunikationsbeziehungen in der Logik einer Prozesssteuerung integriert sein muss, wobei es sich oft auch um proprietäre Ansätze handelt, die in einer entsprechenden Steuerungseinrichtung jeweils situationsangepasst realisiert werden müssen.

Die Druckschrift EP 1 657 606 A1 - Hall et al. "System and methods that integrate RFID technology with industrial controllers" zeigt eine Anordnung, bei der mehrere Transponder von einem Schreib-Lesegerät erfasst werden, wobei die weitere Auswertung durch eine nachgeschaltete Komponente erfolgt.

Die Druckschrift US 2006/0176152 A1 - Wagner et al. "RFID power ramping for TAG singulation" zeigt eine Vorgehensweise, bei der die Sendeleistung eines Schreib-Lesegerätes solange sukzessive erhöht wird, bis ein Transponder erfasst wird. Danach wird das Schreib-Lesegerät in einen Ruhezustand versetzt.

Es ist also eine Aufgabe der vorliegenden Erfindung, ein Verfahren und ein Schreib-Lesegerät anzugeben, mit dem in Anordnungen, in denen sich eine Mehrzahl von Transpondern im Funkbereich eines Schreib-Lesegerätes befindet, eine eindeutige Bestimmung eines bestimmten, nächstliegenden der Transponder möglich ist.

Es ist dabei eine Kernidee der Lösung des Problems, mittels des Schreib-Lesegerätes eine "Sitzung" für genau einen ausgewählten der Transponder zu definieren, wobei während dieser "Sitzung" keine wechselseitige Kommunikationsbeziehung zu einem anderen der Transponder aufgebaut werden soll.

Die vorliegende Aufgabe wird insbesondere durch ein Verfahren gemäß dem Patentanspruch 1 und durch ein Schreib-Lesegerät gemäß dem Patentanspruch 14 gelöst.

Dabei ist ein Verfahren für ein Schreib-Lesegerät in einer Anordnung mit einer Mehrzahl berührungslos auslesbarer Transponder vorgesehen, wobei jeder der Transponder eine eindeutige Identifizierungsnummer aufweist, wobei das Schreib-Lesegerät mit einer industriellen Steuerungseinrichtung verbunden ist, und wobei in einer Erkennungsphase ein erster der Transponder von dem Schreib-Lesegerät erfasst wird. Dabei wird zu Beginn einer Haltephase die Identifizierungsnummer des ersten Transponders in einem Halteregister des Schreib-Lesegerätes gespeichert, wonach in der Haltephase die weiteren der Transponder von dem Schreib-Lesegerät ignoriert werden, und zur Beendigung der Haltephase die Identifizierungsnummer des ersten der Transponder aus dem Halteregister gelöscht wird. Durch dieses Verfahren wird verhindert, dass weitere Transponder, die sich in einem Empfangsbereich des Schreib-Lesegerätes befinden, einen Produktionsprozess o.ä. stören, der schon mit dem zuerst erfassten Transponder korreliert ist.

Die Lösung der Aufgabe sieht außerdem ein Schreib-Lesegerät zum Einsatz in einer Anordnung mit einer Mehrzahl berührungslos auslesbarer Transponder vor, wobei das Schreib-Lesegerät zur Ausführung des vorstehend beschriebenen Verfahrens eingerichtet ist. Somit lassen sich durch das Schreib-Lesegerät dieselben Vorteile realisieren, wie mit dem erfindungsgemäßen Verfahren.

Vorteilhafte Ausgestaltungen des erfindungsgemäßen Verfahrens sind in den abhängigen Patentansprüchen 2 bis 13 angegeben, wobei deren Merkmale und Vorteile sinngemäß auch für das erfindungsgemäße Schreib-Lesegerät gelten. Umgekehrt sind die Merkmale und Vorteile der vorteilhaften Ausgestaltung, wie sie im abhängigen Patentanspruch 15 für das Schreib-Lesegerät angegeben sind, sinngemäß auch für das erfindungsgemäße Verfahren gültig. Dabei können die unterschiedlichen erfindungsgemäßen Ausgestaltungen entweder einzeln oder auch in Kombination miteinander realisiert werden.

Vorteilhaft wird durch das Schreib-Lesegerät eine Sendeleistung während der Haltephase von einem Minimum ausgehend schrittweise auf ein Maximum erhöht. Dadurch wird gewährleistet, dass ein einmal erfasster Transponder auch bei Störungen und Bewegungen im Sende-Empfangsbereich des Schreib-Lesegerätes sicher "gehalten" wird, und der Kontakt zu diesem Transponder nicht verloren geht. Dies bewirkt außerdem, dass der Transponder sicher durchgehend im Betrieb bleibt und nicht aufgrund mangelnder Energieversorgung vorübergehend deaktiviert wird. Ebenso wird in der Erkennungsphase ausgehend von einer geringen Sendeleistung diese sukzessive erhöht, bis zumindest ein Transponder erkannt wird. Dadurch wird gewährleistet, dass mit einer hohen Wahrscheinlichkeit der räumlich nächstliegende Transponder erfasst wird, und nicht zufällig irgendein Transponder einer Vielzahl von Transpondern, die sich alle im maximalen Sende/Empfangsradius des Schreib-Lesegerätes befinden.

Die Haltephase wird durch das Lesegerät entweder nach dem Empfang eines entsprechenden Befehls der Steuerungseinrichtung oder nach Ablauf einer maximalen Haltefrist beendet. Die Beendigung der Haltefrist durch einen Befehl der Steuerungseinrichtung macht es möglich, das Schreib-Lesegerät so lange von der Kontaktaufnahme zu anderen Transpondern fernzuhalten, bis ein entsprechender Verarbeitungsschritt der Steuerungseinrichtung abgeschlossen ist. Insbesondere aus Sicherheitsgründen, falls also beispielsweise eine Beendigungsmeldung der Steuerungseinrichtung verloren gegangen ist, kann alternativ oder zusätzlich eine maximale Haltefrist definiert werden, nach der das Schreib-Lesegerät wieder neu für die Kontaktaufnahme zu einem Transponder zur Verfügung steht.

In einer vorteilhaften Ausgestaltung wird in dem Schreib-Lesegerät eine Sperrliste über eine Anzahl an bekannten Identifizierungsnummern geführt, wobei in der Erkennungsphase eine dabei erfasste Identifizierungsnummer mit den Einträgen der Sperrliste verglichen wird, und wobei in einem positiven Vergleichsfall der erfasste Transponder ignoriert wird. Somit können beispielsweise Objekte oder Werkstücke, die an derselben Verarbeitungsstation bereits bearbeitet werden, von einer neuen Erfassung ausgeschlossen werden, selbst dann, wenn sich die Transponder im Empfangsbereich des Schreib-Lesegerätes befinden. Auch können derart Doppelerfassungen vermieden werden. In einer vorteilhaften Ausgestaltung können nach Ablauf der Haltephase die Einträge des Halteregisters jeweils in die Sperrliste aufgenommen werden. Alternativ oder zusätzlich zur Verwendung der Sperrliste kann in dem Schreib-Lesegerät ein Filter bzw. eine Filterinstanz installiert sein, welche anhand von einstellbaren Kriterien darüber entscheidet, ob ein in der Erkennungsphase erfasster Transponder ignoriert wird, oder nicht. Dazu kann beispielsweise die Identifizierungsnummer des neu erfassten Transponders ausgewertet werden, in der beispielsweise Eigenschaften des Transponders bzw. des damit identifizierten Objektes kodiert sein können. Es können jedoch auch Merkmale der Funkverbindung ausgewertet werden, beispielsweise die Empfangsfeldstärke. Damit ist es beispielsweise möglich, Transponder mit schwachem Signal, die sich vermutlich weit weg vom Lesegerät befinden, zu ignorieren. In einem anderen Beispiel kann über eine Mehrzahl von Erfassungen bzw. Kommunikations-Versuchen desselben Transponders eine Statistik geführt werden, wobei bei einer schlechten Erkennungsrate dieser Transponder ignoriert wird, und sonst nicht. Weiter kann in dem Filter definiert sein, dass nur dann ein Transponder in die Haltephase übernommen wird, und somit dessen Identifizierungsnummer an die Steuerungseinrichtung übermittelt wird, wenn sich genau ein Transponder im Empfangsbereich des Schreib-Lesegerätes befindet.

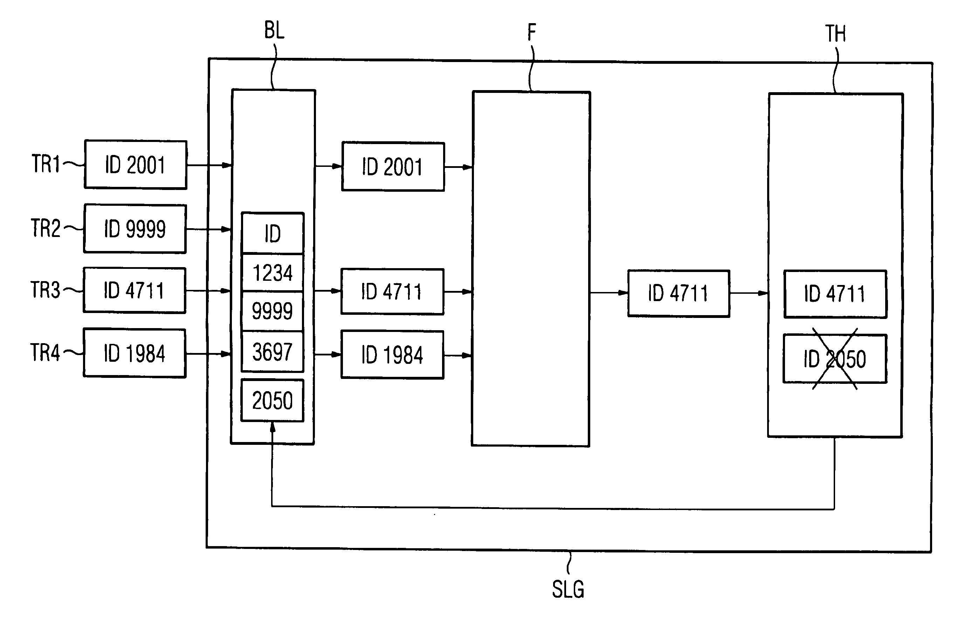

Ausführungsbeispiele des erfindungsgemäßen Verfahrens und des erfindungsgemäßen Schreib-Lesegerätes werden nachfolgend anhand der Zeichnung erläutert.

Dabei zeigt die einzige Figur in schematischer Darstellung, die Erfassung von Identifizierungsnummern von Transpondern und deren Weiterverarbeitung im Schreib-Lesegerät.

Im Folgenden soll eine (nicht gegenständlich dargestellte) Anordnung aus einem Schreib-Lesegerät SLG, einer (nicht dargestellten) industriellen Steuerungseinrichtung und vier Transpondern TR1, ..., TR4 betrachtet werden. Die Transponder TR1, ..., TR4 befinden sich innerhalb des maximalen Sende/Empfangsbereichs des Schreib-Lesegerätes SLG.

Zunächst wird angenommen, dass sich das Schreib-Lesegerät SLG in einer Erkennungsphase befindet, d.h., dass im Halteregister TH "Tag Hold" keiner der Transponder TR1, ..., TR4 registriert ist. Das Schreib-Lesegerät SLG sendet nun zur Erfassung eine Trägerwelle aus, und zwar zunächst mit einer minimalen Sendeleistung. Diese Sendeleistung wird sukzessive erhöht, bis zumindest einer der Transponder TR1, ..., TR4 aktiviert wird. Dies ist im Idealfall der dem Schreib-Lesegerät nächstliegende Transponder; im vorliegenden Ausführungsbeispiel sei der "Worst Case" angenommen, in welchem alle vier Transponder TR1, ..., TR4 reagieren. Die Identifizierungsnummern (ID) 2001, 9999, 7411, 1984 werden nun durch das Schreib-Lesegerät mit einer Sperrliste BL ("Blacklist") verglichen, wobei dort registriert ist, dass die Identifizierungsnummern 1234, 9999, 3697 bereits von der dem Schreib-Lesegerät SLG zugeordneten Verarbeitungsstation, nämlich der Steuerungseinrichtung, bearbeitet wurden. Somit wird von den vier erfassten Transpondern TR1, ..., TR4 bereits die Identifizierungsnummer 9999, nämlich diejenige des Transponders TR2, aussortiert und somit in der weiteren Folge ignoriert. Die Identifizierungsnummern 2001, 4711, 1984 der verbleibenden Transponder TR1, TR2 werden weiter dem Filter F zugeführt, wo anhand vorbestimmter Kriterien eine weitere Auswahl getroffen wird; im vorliegenden Ausführungsbeispiel sei angenommen, dass die Identifizierungsnummer 4711 des am besten empfangbaren (höchster (RSSI-Wert) Transponders TR3 übrig bleibt; diese Identifizierungsnummer 4711 wird in das Halteregister TH eingetragen; solange diese Identifizierungsnummer 4711 dort eingetragen ist, werden empfangene Identifizierungen von anderen Transpondern in der Folge ignoriert. Gleichzeitig wird die Sendeleistung des Schreib-Lesegerätes SLG auf einen Maximalwert hinaufgesetzt, um sicherzustellen, dass unverzüglich eine weitere Kommunikation mit dem Transponder TR3 möglich ist.

Sobald eine Bearbeitung eines Objektes, welches mit dem Transponder TR3 markiert ist, durch die Steuerungseinrichtung abgeschlossen ist, meldet dies die Steuerungseinrichtung an das Schreib-Lesegerät, so dass die entsprechende Identifizierungsnummer aus dem Halteregister TH gelöscht wird. Dies ist in der Figur beispielhaft an der Identifizierungsnummer 2050 dargestellt, welche aus dem Halteregister TH gelöscht wird; dies ist durch ein Kreuz dargestellt. Gemäß einer vorteilhaften Ausgestaltung der Erfindung übernimmt das Schreib-Lesegerät diese gelöschte Identifizierungsnummer 2050 automatisch in die Sperrliste BL, was in der Figur durch einen entsprechenden Pfeil dargestellt worden ist.

Zusammengefasst lässt sich sagen, dass in einer vorteilhaften Ausgestaltung während der Erkennungsphase zunächst die Sendeleistung des Schreib-Lesegerätes SLG schrittweise von einem Minimalwert ausgehend gesteigert wird, wodurch in der Regel zuerst derjenige der Transponder TR1, ..., TR4 mit Energie versorgt wird, der sich örtlich am nächsten zur Antenne befindet. Die Sperrliste BL bewirkt in den Fällen, in denen durch einen Prozess bekannt ist, dass Objekte nach der Bearbeitung nicht noch einmal zu dem Schreib-Lesegerät SLG zurückkommen, die entsprechenden Transponder TR1, ..., TR4 nach Abschluss des Prozessschrittes gesperrt werden, so dass in den Fällen, in denen der entsprechende Transponder TR1, ..., TR4 später ungewollt noch einmal in das Feld des Schreib-Lesegerätes SLG gelangen, diese Transponder TR1, ..., TR4 automatisch vom Schreib-Lesegerät SLG ignoriert werden. Durch weitere Filter F auf Basis beispielsweise der Funkeigenschaften der Transponder TR1, ..., TR4 (Erkennungsrate, RSSI-Wert, usw.) können die restlichen Transponder TR1, ..., TR4 herausgefiltert werden, so dass nur noch genau ein Transponder TR1, ..., TR4 übrig bleibt. Sollte nach Durchlaufen des Filters kein oder mehrere Transponder TR1, ..., TR4 übrig bleiben, löst das Schreib-Lesegerät SLG vorteilhaft einen Fehler bzw. eine Fehlermeldung aus, um fehlerhaftes Ausführen von nachgelagerten Prozessschritten der Steuerungseinrichtung zu vermeiden.

Für die Haltephase lässt sich für eine vorteilhafte Ausgestaltung zusammengefasst sagen, dass während der Haltephase das Schreib-Lesegerät die Identifikationsnummer (ID) des aktuell betrachteten Transponders TR1, ..., TR4 speichert. Ab diesem Zeitpunkt kommuniziert das Schreib-Lesegerät SLG ausschließlich mit dem ausgewählten, gespeicherten der Transponder TR1, ..., TR4; alle anderen werden fortan ignoriert. Spätestens wenn das Schreib-Lesegerät SLG plötzlich den Funkkontakt zu diesem der Transponder TR1, ..., TR4 verliert, oder es zu einem Lese- oder Schreibfehler kommt, erhöht das Schreib-Lesegerät automatisch die Sendeleistung, im Extremfall bis zum gesetzlich erlaubten Maximalwert. Zwar steigt bei erhöhter Sendeleistung das Risiko, weitere ungewünschte Transponder zu erkennen; durch Registrierung des bereits erfassten Transponders im Halteregister TH werden diese unerwünschten Transponder jedoch von dem Schreib-Lesegerät SLG ignoriert. Das Schreib-Lesegerät SLG speichert auch in Betriebs- oder Sendepausen weiterhin die Identifikationsnummer im Halteregister TH, so dass bei einem Neustart oder bei einem "Wiederaufsetzen" nicht erneut der nächstliegende Transponder gesucht werden muss. Der Eintrag im Halteregister TH kann durch einen Befehl der Steuerungseinheit an das Schreib-Lesegerät SLG gelöscht werden, so dass das Verfahren beginnend mit der Erkennungsphase neu gestartet werden kann. Optional kann die gelöschte Identifikationsnummer noch in die Sperrliste BL eingetragen werden.

## Patentansprüche

1. Verfahren für ein Schreib-Lesegerät (SLG) in einer Anordnung mit einer Mehrzahl berührungslos auslesbarer Transponder (TR1, ..., TR4),
wobei jeder der Transponder (TR1, ..., TR4) eine eindeutige Identifizierungsnummer (ID) aufweist,
wobei das Schreib-Lesegerät (SLG) mit einer industriellen Steuerungseinrichtung verbunden ist, und
wobei in einer Erkennungsphase ein erster der Transponder (TR1, ..., TR4) von dem Schreib-Lesegerät (SLG) erfasst wird,
**dadurch gekennzeichnet,**
**dass** zu Beginn einer Haltephase die Identifizierungsnummer (ID) des ersten Transponders (TR1, ..., TR4) in einem Halteregister (TH) des Schreib-Lesegerätes (SLG) gespeichert wird, wonach in der Haltephase die weiteren der Transponder (TR1, ..., TR4) von dem Schreib-Lesegerät (SLG) ignoriert werden, und
**dass** zur Beendigung der Haltephase die Identifizierungsnummer (ID) des ersten der Transponder (TR1, ..., TR4) aus dem Halteregister (TH) gelöscht wird.

2. Verfahren nach Patentanspruch 1,
**dadurch gekennzeichnet,**
**dass** durch das Schreib-Lesegerät (SLG) eine Sendeleistung während der Haltephase von einem Minimum ausgehend schrittweise auf ein Maximum erhöht wird.

3. Verfahren nach einem der vorhergehenden Patentansprüche,
**dadurch gekennzeichnet,**
**dass** die Haltephase durch das Schreib-Lesegerät (SLG) nach dem Empfang eines entsprechenden Befehls der Steuerungseinrichtung oder nach Ablauf einer maximalen Haltefrist beendet wird.

4. Verfahren nach einem der vorhergehenden Patentansprüche,
**dadurch gekennzeichnet,**
**dass** in dem Schreib-Lesegerät (SLG) eine Sperrliste (BL) über eine Anzahl an Identifizierungsnummern (ID) geführt wird, wobei jeweils die Identifizierungsnummer (ID) eines während der Erkennungsphase erfassten der Transponder (TR1, ..., TR4) mit den Einträgen der Sperrliste (BL) verglichen wird, wobei bei einer Übereinstimmung mit dem jeweiligen Transponder (TR1, ..., TR4) dieser von dem Schreib-Lesegerät (SLG) ignoriert wird.

5. Verfahren nach Patentanspruch 4,
**dadurch gekennzeichnet,**
**dass** nach dem Löschen der Identifizierungsnummer (ID) aus dem Halteregister (TH) diese Identifizierungsnummer (ID) der Sperrliste (BL) hinzugefügt wird.

6. Verfahren nach einem der Patentansprüche 4 oder 5,
**dadurch gekennzeichnet,**
**dass** die Einträge in der Sperrliste (BL) jeweils nach Ablauf einer Sperrfrist gelöscht werden.

7. Verfahren nach einem der vorhergehenden Patentansprüche,
**dadurch gekennzeichnet,**
**dass** die in der Erkennungsphase erfassten Transponder (TR1, ..., TR4) jeweils durch eine Filterinstanz (F) bewertet werden, wobei anhand der Filterung entschieden wird, ob der jeweilige Transponder (TR1, ..., TR4) im Halteregister (TH) registriert wird, oder ob dieser durch das Schreib-Lesegerät (SLG) ignoriert wird.

8. Verfahren nach Patentanspruch 7,
**dadurch gekennzeichnet,**
**dass** als ein Filterkriterium eine Eigenschaft der Funkverbindung zwischen dem jeweiligen Transponder (TR1, ..., TR4) und dem Schreib-Lesegerät (SLG) ausgewertet wird.

9. Verfahren nach Patenanspruch 8,
**dadurch gekennzeichnet,**
**dass** die ausgewertete Eigenschaft eine Empfangsfeldstärke eines Funksignals des Transponders (TR1, ..., TR4) ist.

10. Verfahren nach Patentanspruch 8 oder 9,
**dadurch gekennzeichnet,**
**dass** als eine auszuwertende Eigenschaft eine Erkennungsrate bei einer Mehrzahl an Kommunikationszyklen des Schreib-Lesegerätes (SLG) mit dem betreffenden Transponder (TR1, ..., TR4) ist.

11. Verfahren nach einem der Patentansprüche 8 bis 10,
**dadurch gekennzeichnet,**
**dass** als Filterkriterium eine in der Identifizierungsnummer (ID) oder in einem Nutzdatenfeld des jeweiligen Transponders (TR1, ..., TR4) codierte Eigenschaft verwendet wird.

12. Verfahren nach einem der vorhergehenden Patentansprüche,
**dadurch gekennzeichnet,**
**dass** das Schreib-Lesegerät (SLG) in der Erkennungsphase ausgehend von einer minimalen Sendeleistung schrittweise mit einer höheren Sendeleistung betrieben wird, bis zumindest eine Transponder (TR1, ..., TR4) erfasst wird oder bis eine maximale Sendeleistung erreicht ist.

13. Verfahren nach einem der vorhergehenden Patenansprüche,
**dadurch gekennzeichnet,**
**dass** während der Haltephase die Identifizierungsnummer (ID) des ersten Transponders (TR1, ..., TR4) in der Steuerungseinrichtung übertragen wird.

14. Schreib-Lesegerät (SLG) zum Einsatz in einer Anordnung mit einer Mehrzahl berührungslos auslesbarer Transponder (TR1, ..., TR4),
**dadurch gekennzeichnet,**
**dass** das Schreib-Lesegerät (SLG) zur Ausführung eines der vorstehend beschriebenen Verfahren ausgebildet ist.

15. Schreib-Lesegerät (SLG) gemäß dem Patentanspruch 14,
**dadurch gekennzeichnet,**
**dass** das Schreib-Lesegerät (SLG) zur Aufgabe einer Fehlermeldung an die Steuerungseinrichtung zumindest in den Fällen eingerichtet ist, in denen nach einer Filterung der erfassten Transponder (TR1, ..., TR4) und/oder nach dem Vergleich der Identifizierungsnummern (ID) der erfassten Transponder (TR1, ..., TR4) mit einer Sperrliste (BL) kein Transponder (TR1, ..., TR4) zum Aufbau einer wechselseitigen Kommunikationsbeziehung oder mehr als ein Transponder (TR1, ..., TR4) zum Aufbau einer wechselseitigen Kommunikationsbeziehung verbleibt.

## Claims

1. Method for a read/write unit (SLG) in a configuration with multiple contactlessly readable transponders (TR1, ..., TR4),
each of the transponders (TR1, ..., TR4) having a unique identification number (ID),
the read/write unit (SLG) being connected to an industrial control device, and,
in a recognition phase, a first of the transponders (TR1, ..., TR4) being detected by the read/write unit (SLG),
**characterized**
**in that**, at the start of a holding phase, the identification number (ID) of the first transponder (TR1, ..., TR4) is stored in a holding register (TH) of the read/write unit (SLG), after which, in the holding phase, the further transponders (TR1, ..., TR4) are ignored by the read/write unit (SLG), and
**in that**, in order to terminate the holding phase, the identification number (ID) of the first of the transponders (TR1, ..., TR4) is deleted from the holding register (TH).

2. Method according to Patent Claim 1,
**characterized in that**,
during the holding phase, a transmitted power is increased to a maximum step-by-step, starting from a minimum, by the read/write unit (SLG).

3. Method according to one of the preceding patent claims,
**characterized in that**
the holding phase is terminated by the read/write unit (SLG) following the receipt of an appropriate command from the control device or after the expiry of a maximum holding period.

4. Method according to one of the preceding patent claims,
**characterized in that**
a blocking list (BL) relating to a number of identification numbers (ID) is managed in the read/write unit (SLG), in each case the identification number (ID) of one of the transponders (TR1, ..., TR4) detected during the recognition phase being compared with the entries in the blocking list (BL) and, in the event of coincidence with the respective transponder (TR1, ..., TR4), the latter being ignored by the read/write unit (SLG).

5. Method according to Patent Claim 4,
**characterized in that**,
following the deletion of the identification number (ID) from the holding register (TH), this identification number (ID) is added to the blocking list (BL).

6. Method according to either of Patent Claims 4 and 5,
**characterized in that**
the entries in the blocking list (BL) are in each case deleted after the expiry of a blocking period.

7. Method according to one of the preceding patent claims,
**characterized in that**
the transponders (TR1, ..., TR4) detected in the recognition phase are each evaluated by a filter instance (F), a decision being made by using the filtering as to whether the respective transponder (TR1, ..., TR4) is registered in the holding register (TH) or whether said transponder is ignored by the read/write unit (SLG).

8. Method according to Patent Claim 7,
**characterized in that**,
as a filter criterion, a property of the radio link between the respective transponder (TR1, ..., TR4) and the read/write unit (SLG) is evaluated.

9. Method according to Patent Claim 8,
**characterized in that**
the property evaluated is a received field strength of a radio signal from the transponder (TR1, ..., TR4).

10. Method according to Patent Claim 8 or 9,
**characterized in that**
a property to be evaluated is a recognition rate in a multiplicity of communication cycles of the read/write unit (SLG) with the relevant transponder (TR1, ..., TR4).

11. Method according to one of Patent Claims 8 to 10,
**characterized in that**
a filter criterion that is used is a property encoded in the identification number (ID) or in a useful data field of the respective transponder (TR1, ..., TR4).

12. Method according to one of the preceding patent claims,
**characterized in that**,
in the recognition phase, starting from a minimum transmitted power, the read/write unit (SLG) is operated step-by-step with a higher transmitted power until at least one transponder (TR1, ..., TR4) is detected or until a maximum transmitted power is reached.

13. Method according to one of the preceding patent claims,
**characterized in that**,
during the holding phase, the identification number (ID) of the first transponder (TR1, ..., TR4) is transmitted to the control device.

14. Read/write unit (SLG) for use in a configuration with multiple contactlessly readable transponders (TR1, ..., TR4),
**characterized in that**
the read/write unit (SLG) is designed to carry out one of the above-described methods.

15. Read/write unit (SLG) according to Patent Claim 14,
**characterized in that**
the read/write unit (SLG) is equipped to output an error message to the control device at least in those cases in which, following the filtering of the transponders (TR1, ..., TR4) detected and/or following the comparison of the identification numbers (ID) of the transponders (TR1, ..., TR4) detected with a blocking list (BL), no transponder (TR1, ..., TR4) remains to build up a mutual communications relationship or more than one transponder (TR1, ..., TR4) remains to build up a mutual communications relationship.

## Revendications

1. Procédé pour un appareil ( SLG ) d'écriture - lecture dans un agencement ayant une multitude de transpondeurs ( TR1, ..., TR4 ) lisibles sans contact,
dans lequel chacun des transpondeurs ( TR1, ..., TR4 ) a un numéro ( ID ) d'identification univoque,
dans lequel l'appareil ( SLG ) d'écriture - lecture est relié à un dispositif de commande industriel, et
dans lequel, dans une phase de reconnaissance, un premier des transpondeurs ( TR1, ..., TR4 ) est détecté par l'appareil ( SLG ) d'écriture - lecture,
**caractérisé**
**en ce qu'**au début d'une phase de maintien, le numéro ( ID ) d'identification du premier transpondeur ( TR1, ..., TR4 ) est mémorisé dans un registre ( TH ) de maintien de l'appareil ( SLG ) d'écriture - lecture, ensuite, dans la phase de maintien, les autres transpondeurs ( TR1, ..., TR4 ) ne sont pas pris en compte par l'appareil ( SLG ) d'écriture - lecture, et en ce que, pour mettre fin à la phase de maintien, le numéro ( ID ) d'identification du premier des transpondeurs ( TR1, ..., TR4 ) est effacé du registre ( TH ) de maintien.

2. Procédé suivant la revendication 1,
**caractérisé**
**en ce qu'**une puissance d'émission est augmentée par l'appareil ( SLG ) d'écriture - lecture pendant la phase de maintien, en partant d'un minimum pas à pas jusqu'à un maximum.

3. Procédé suivant l'une des revendications précédentes,
**caractérisé**
**en ce qu'**il est mis fin à la phase de maintien, par l'appareil ( SLG ) d'écriture - lecture, après la réception d'une instruction correspondante du dispositif de commande ou après l'expiration d'un délai de maintien maximum.

4. Procédé suivant l'une des revendications précédentes,
**caractérisé**
**en ce qu'**il est mis dans l'appareil ( SLG ) d'écriture - lecture une liste ( BL ) d'exclusion d'un certain nombre de numéros ( ID ) d'identification, le numéro ( ID ) d'identification de l'un des transpondeurs ( TR1, ..., TR4 ), détecté pendant la phase de reconnaissance, étant comparé aux inscriptions de la liste ( BL ) d'exclusion et s'il y a coïncidence avec le transpondeur ( TR1, ..., TR4 ) respectif, celui-ci n'est pas pris en compte par l'appareil ( SLG ) d'écriture - lecture.

5. Procédé suivant la revendication 4,
**caractérisé**
**en ce qu'**après l'effacement du numéro ( ID ) d'identification du registre ( TH ) de maintien, ce numéro ( ID ) d'identification est ajouté à la liste ( BL ) d'exclusion.

6. Procédé suivant l'une des revendications 4 ou 5,
**caractérisé**
**en ce que** les inscriptions dans la liste ( BL ) d'exclusion sont effacées respectivement après l'expiration d'un délai d'exclusion.

7. Procédé suivant l'une des revendications précédentes,
**caractérisé**
**en ce que** les transpondeurs ( TR1, ..., TR4 ), détectés dans la phase de reconnaissance, sont évalués respectivement par une instance ( F ) de filtrage, en décidant, au moyen du filtrage, si le transpondeur ( TR1, ..., TR4 ) respectif est enregistré dans le registre ( TH ) de maintien ou s'il n'est pas pris en compte par l'appareil ( SLG ) d'écriture - lecture.

8. Procédé suivant la revendication 7,
**caractérisé**
**en ce qu'**il est exploité, comme critère de filtrage, une propriété de la liaison radio entre le transpondeur ( TR1, ..., TR4 ) respectif et l'appareil ( SLG ) d'écriture - lecture.

9. Procédé suivant la revendication 8,
**caractérisé**
**en ce que** la propriété exploitée est une intensité de champ reçue d'un signal radio du transpondeur ( TR1, ..., TR4 ).

10. Procédé suivant la revendication 8 ou 9,
**caractérisé**
**en ce qu'**un taux de reconnaissance, pour une multitude de sites de communication de l'appareil ( SLG ) d'écriture - lecture avec le transpondeur ( TR1, ..., TR4 ) concerné, est pris comme propriété à exploiter.

11. Procédé suivant l'une des revendications 8 à 10,
**caractérisé**
**en ce qu'**il est utilisé, comme critère de filtrage, une propriété codée dans le numéro ( ID ) d'identification ou dans un champ de données utiles du transpondeur ( TR1, ..., TR4 ) respectif.

12. Procédé suivant l'une des revendications précédentes,
**caractérisé**
**en ce que** l'appareil ( SLG ) d'écriture - lecture fonctionne dans la phase de reconnaissance, à partir d'une puissance d'émission minimum pas à pas avec une puissance d'émission plus grande, jusqu'à ce qu'au moins un transpondeur ( TR1, ..., TR4 ) soit détecté, ou jusqu'à ce qu'une puissance d'émission maximum soit atteinte.

13. Procédé suivant l'une des revendications précédentes,
**caractérisé**
**en ce que**, pendant la phase de maintien, le numéro ( ID ) d'identification du premier transpondeur ( TR1, ..., TR4 ) est transmis au dispositif de commande.

14. Appareil ( SLG ) d'écriture - lecture à utiliser dans un agencement ayant une multitude de transpondeurs ( TR1, ..., TR4 ) lisibles sans contact,
**caractérisé**
**en ce que** l'appareil ( SLG ) d'écriture - lecture est constitué pour la mise en oeuvre de l'un des procédés décrits ci-dessus.

15. Appareil ( SLG ) d'écriture - lecture suivant la revendication 14,
**caractérisé**
**en ce que** l'appareil ( SLG ) d'écriture - lecture est conçu pour donner un message d'erreur au dispositif de commande, au moins dans les cas dans lesquels, après un filtrage du transpondeur ( TR1, ..., TR4 ) détecté et/ou après la comparaison du numéro ( ID ) d'identification du transpondeur ( TR1, ..., TR4 ) détecté à une liste ( BL ) d'exclusion, il ne reste pas de transpondeur ( TR1, ..., TR4 ) pour l'établissement d'une relation de communication réciproque ou il reste plus qu'un transpondeur ( TR1, ..., TR4 ) pour l'établissement d'une relation de communication réciproque.
